# EUROPEAN PATENT SPECIFICATION

(11) **EP 0 391 388 B1**
(45) Date of publication and mention of the grant of the patent: **29.06.1994**
(21) Application number: 90106432.9
(22) Date of filing: 04.04.1990
(51) Int. Cl.: C01G 49/06

(54) **Process for production of lepidocrosite**
Verfahren zur Herstellung von Lepidokrokit
Procédé pour la production de lépidocrosite

(30) Priority: 05.04.1989 JP 86531/89
(43) Date of publication of application: 10.10.1990
(73) Proprietor: SHOWA DENKO KABUSHIKI KAISHA, Minato-ku, Tokyo (JP)
(72) Inventor: Kimura, Kiichi c/o Showa Denko K.K., Yokohama-shi Kanagawa (JP); Kaji, Hiroaki c/o Showa Denko K.K., Yokohama-shi Kanagawa (JP); Okazaki, Kenichi c/o Showa Denko K.K., Yokohama-shi Kanagawa (JP)
(74) Representative: Henkel, Feiler, Hänzel & Partner

(56) References cited:
- GB-A- 2 085 860
- PATENT ABSTRACTS OF JAPAN, vol. 11, no. 332 (C-455)[2779], 29th October 1987; & JP-A-62 119 118 (SHOWA DENKO K.K.) 30-05-1987
- PATENT ABSTRACTS OF JAPAN, vol. 11, no. 267 (C-443)[2714], 28th August 1987; & JP-A-62 65 934 (SHOWA DENKO K.K.) 25-03-1987
- PATENT ABSTRACTS OF JAPAN, vol. 12, no. 446 (C-546)[3293], 24th November 1988; & JP-A-63 170 222 (SHOWA DENKO K.K.) 14-07-1988

## Description

### BACKGROUND OF THE INVENTION

### 1. Field of the Invention

The present invention relates to a process for the production of lepidocrosite. More particularly, the present invention relates to a process for the production of lepidocrosite which is suitable as the starting substance for the production of a magnetic iron oxide powder for a magnetic recording medium such as an audio tape, a video tape or a magnetic card.

### 2. Description of the Related Art

Where a magnetic iron oxide powder for a recording medium such as an audio tape, a video tape or a magnetic card is prepared by using lepidocrosite as the starting substance, there is generally adopted a method comprising subjecting lepidocrosite to such treatments as calcination (dehydration and vitrification), reduction and oxidation in sequence to form acicular γ-Fe₂O₃ (maghemite) and, optionally, subjecting the product to a cobalt modification treatment to obtain Co-γ-Fe₂O₃ having the surfaces covered with cobalt. Since the magnetic characteristics of the magnetic powder obtained according to this method depend on the properties of the starting substance, to obtain a magnetic powder suitable for a magnetic recording medium, it is necessary to use a starting substance having excellent properties.

As the conventional technique, there can be mentioned a method in which a suspension of lepidocrosite is aged in the presence of Fe²⁺ to improve the particle size distribution, and an alkali is added and the residual Fe²⁺ is oxidized by blowing an oxygen-containing gas into the suspension to grow lepidocrosite particles, as disclosed in Japanese Unexamined Patent Publication No. 62-65934.

Of the characteristics of lepidocrosite as the starting substance, the particle size and particle size distribution are closely related to the particle size, particle size distribution and magnetic characteristics of the magnetic iron oxide powder as the final product, and therefore, improvements of the particle size and particle size distribution in lepidocrosite are very important for improving the magnetic characteristics of the magnetic iron oxide powder.

In general, lepidocrosite used as the starting substance is prepared according to the following synthesis process.

At first, an alkaline aqueous solution of caustic alkali or ammonia is added to an aqueous solution of ferrous chloride in an amount smaller than the theoretical amount necessary for converting ferrous chloride to ferrous hydroxide, whereby neutralization is effected, and then the suspension is oxidized by an oxygen-containing gas to form a seed crystal by the seed reaction. At this seed reaction, the reaction temperature is adjusted to 10 to 25°C. As the seed reaction gets nearer to the termination, the pH value of the reaction suspension is reduced, and after the termination of the reaction, the pH value is 3.2 to 3.8.

Then the temperature is elevated to 30 to 50°C, and an oxygen-containing gas is blown into the suspension and an alkaline solution is added so that the pH value is 3.0 to 4.0, whereby a growth reaction is effected. As this reaction gets nearer to the termination, the pH value rises, and when the pH value becomes 5.5, the growth reaction is terminated to obtain acicular lepidocrosite.

Nevertheless, this process is defective in that the particle size distribution of lepidocrosite obtained by the above growth reaction is not good and the magnetic characteristics of the final product are adversely influenced. Moreover, in this process, the formed particles are agglomerated in the raft-like form, and interparticle sintering readily occurs while such particles are heat-treated for dehydration, calcination, reduction, and oxidation.

Furthermore, Japanese Unexamined Patent Publication No. 62-65934 discloses for obtaining γ-FeOOH having a good particle size distribution, which comprises carrying out the seed reaction while first adjusting the amount of alkali to a level 0.4 to 0.7 times the theoretical amount, aging the suspension under specific conditions, and blowing an oxygen-containing gas into the suspension while adding alkali thereto, to complete the reaction of forming γ-FeOOH. In this process, however, particles are readily agglomerated at the growth reaction after the aging, and the above-mentioned defects are similarly brought about at the neat treatment.

### SUMMARY OF THE INVENTION

A primary object of the present invention is to overcome the above-mentioned defects of the conventional techniques and provide a process for the production of lepidocrosite particles having a good particle size distribution.

In accordance with the present invention, this object can be attained by a process for the production of lepidocrosite, which comprises the step of adding an alkali to an aqueous solution of ferrous chloride in an amount 0.20 to 0.95 times the theoretical amount necessary for converting the ferrous chloride to ferrous hydroxide, the step of blowing an oxygen-containing gas into the obtained Fe²⁺-containing solution to form a seed crystal of γ-FeOOH, the step of aging and growing γ-FeOOH while maintaining the Fe²⁺-containing solution at a pH value of 2.0 to 8.0 in a non-oxidizing atmosphere, and the step of separating grown particles of γ-FeOOH from the Fe²⁺-containing solution without an addition of an oxygen-containing gas and an alkali, and washing the separated particles.

The aging process disclosed in Japanese Unexamined Patent Publication No. 62-65934 effectively improves the particle size distribution (obtaining a sharp distribution), but as taught in this patent publication, to increase the yield of γ-FeOOH in general, an oxygen-containing gas is blown into the Fe²⁺-containing residue after the aging reaction while adding an alkali to grow γ-FeOOH.

As the result of later investigations, it was found that, if the growth reaction is further conducted after the aging, particles are agglomerated. The present invention is based on this finding, and the process of the present invention is characterized in that, after aging is carried out in the presence of a predetermined amount of Fe²⁺, γ-FeOOH is separated from the liquid without performing the γ-FeOOH-growing reaction of blowing an oxygen-containing gas while adding an alkali.

According to the present invention, lepidocrosite particles are grown by carrying out aging in the presence of Fe²⁺, and the particles are then separated without carrying out the growth of particles by Fe²⁺, whereby particles having a desired specific surface are easily obtained, and furthermore, the particle size distribution is improved. Therefore, it is possible to supply lepidocrosite having excellent properties for the production of a magnetic iron oxide powder.

### BRIEF DESCRIPTION OF THE DRAWINGS

Figure 1 is a TEM (transmission electron microscope) photo (30,000 magnifications) showing the particle structure of the seed crystal before the growth of particles;
Fig. 2 is a TEM photo (30,000 magnifications) showing the structure of particles grown by 3 hours' aging; and,
Fig. 3 is a TEM photo (30,000 magnifications) showing the structure of particles obtained by carrying out the growth reaction with Fe²⁺ by adding an alkali after the aging.

### DESCRIPTION OF THE PREFERRED EMBODIMENTS

According to the present invention, first an alkali such as caustic alkali or ammonia is added to an aqueous solution of ferrous chloride and an oxygen-containing gas is blown into the solution to form a seed crystal of γ-FeOOH. The amount of the alkali added is 0.20 to 0.95 times the theoretical amount necessary for converting ferrous chloride to ferrous hydroxide. If the amount of the alkali is too small, the seed crystal is composed of very fine particles having a specific surface area of at least 200 m²/g. In the present invention, since γ-FeOOH is separated without adding the alkali to unreacted ferrous chloride, if the amount of the alkali is small, the amount of remaining Fe²⁺ becomes large, and the process is disadvantageous even if Fe²⁺ is used repeatedly. In view of the foregoing, the amount of the alkali must be at least 0.20 times the theoretical amount. Moreover, in the present invention, Fe²⁺ must be present in an amount exceeding a certain level. Accordingly, the amount of the alkali should be up to 0.95 time the theoretical amount. The concentration of ferrous chloride is preferably 0.3 to 0.4 mole/kg, and air is generally used as the oxygen-containing gas.

By the above-mentioned treatment, a seed crystal of γ-FeOOH is formed, and then the suspension containing this seed crystal is aged in a non-oxidizing atmosphere such as N₂. The pH value at this aging is adjusted to 2.0 to 8.0.

The speed of the growth of the particles depends on the pH value of the aqueous solution at the aging treatment. Namely, the higher the pH value, the higher the growing speed, and the lower the pH value, the lower the growing speed. If the pH value is lower than 2.0, the growing speed is greatly reduced. If the pH value exceeds 8.0, the inclusion of magnetite becomes conspicuous, although the degree differs to some extent according to the concentration of Fe²⁺, and such a high pH value is not suitable for the production of acicular magnetic iron oxide. To grow the particles in a short time (about 2 hours) without a formation of impurities, preferably the pH value is 4.0 to 5.5.

The higher the aging temperature, the higher the particle-growing speed, but to grow particles and control the growth of particles, preferably the aging temperature is 20 to 70°C, although the preferred aging temperature is changed to some extent according to the pH value. If the aging is carried out within this temperature range at a pH value of 2.0 to 8.0, the aging time is 1 to 3 hours. If the aging temperature is lower than 20°C, the particle-growing speed is low, and a long time of 4 to 5 hours or more is required for the aging. If the aging temperature is higher than 70°C, coarse particles are formed in about 1 hour.

By the aging treatment, particles of lepidocrosite agglomerated in the raft-like from are grown to one thick columnar particle. Simultaneously, fine particles are dissolved and extinguished, and accordingly, a good particle size distribution is obtained.

The present invention is characterized in that, after the aging γ-FeOOH is separated from the liquid by filtration or the like without carrying out the growth reaction by adding an alkali to the Fe²⁺-containing liquid. The separated γ-FeOOH is washed and dried and is fed to the next firing step. The remaining Fe²⁺-containing solution is used again as the starting material.

If particles are grown by blowing an oxygen-containing gas into the aged suspension while adding an alkali thereto to oxidize ferrous iron, particles are easily agglomerated, and it is difficult to perform a heat treatment while retaining the shapes of respective particles.

### EXAMPLES

The present invention will now be described in detail with reference to the following examples.

### Example 1

In a reaction vessel in which a nitrogen gas atmosphere was maintained, 102 kg of an aqueous solution of ferrous chloride having a concentration of 0.93 mole/kg was stirred and 131 kg (0.5 time the theoretical value) of an aqueous solution of sodium hydroxide having a concentration of 0.866 mole/kg was added. While controlling the liquid temperature to 17°C, air was blown into the liquid at a rate of 78 ℓ/min to effect oxidation and initiate seed reaction, the pH value was reduced, and when the pH value became a minimum value of about 6, the flow rate of air was changed to 30 ℓ/min. The pH value was gradually elevated to a maximum value and then reduced, and when the pH value was reduced to 5.5 before the termination of the seed reaction, the blowing of air was stopped and nitrogen gas was blown into the liquid at a rate of 42 ℓ/min, to produce an inert atmosphere in the reaction vessel. Then the temperature was elevated to 40°C with stirring.

Then, while maintaining the pH value at 5.5 and the temperature at 40°C, aging was carried out for a time shown in Table 1 while feeding nitrogen gas at a flow rate of 7.6 ℓ/min. After the aging, the particles were recovered by filtration, washed and dried, and the specific surface area (m²/g) of the obtained lepidocrosite was measured. The results are shown in Table 1.

**Table 1**

| Aging Time (hours) | Specific Surface Area (m²/g) |
|---|---|
| 0 | 95.2 |
| 0.5 | 51.5 |
| 1.0 | 47.3 |
| 2.0 | 42.4 |
| 3.0 | 41.1 |

From the results shown in Table 1 it is seen that the growth of particles was promptly advanced, and by appropriately selecting the aging time, particles having a desired specific surface area were obtained in a short time.

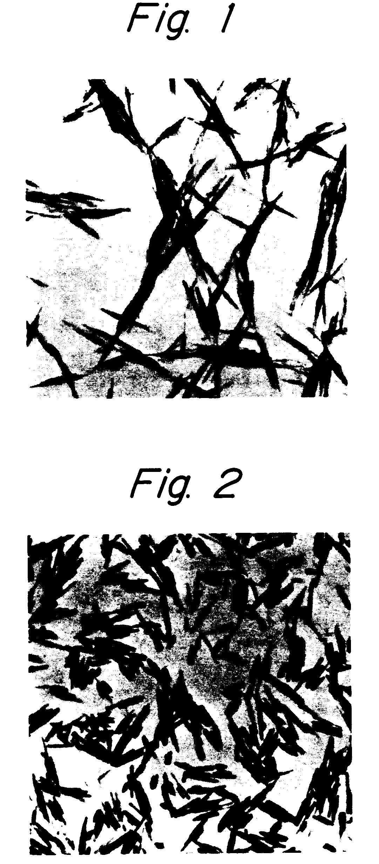

A TEM photo of the seed crystal before the growth of particles and a TEM photo of particles after the aging are shown in Figs. 1 and 2, respectively. From these photos, it is seen that the seed crystal agglomerated in the raft-like form grew to one thick particle and the particles were widely dispersed and had a good particle size distribution.

### Comparative Example 1

Air was blown at a rate of 13 ℓ/min into the suspension obtained after the aging in Example 1, while adding an alkali to the suspension, to effect a growth reaction.

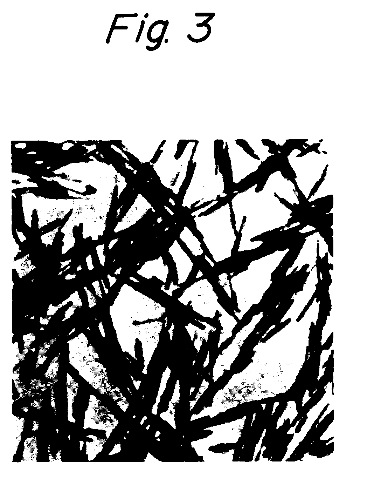

A TEM photo of the particles obtained after this growth reaction is shown in Fig. 3. The specific surface area of the obtained γ-FeOOH particles was 31 m²/g.

## Claims

1. A process for the production of lepidocrosite, which comprises:
(A) adding an alkali to an aqueous solution of ferrous chloride in an amount 0.20 to 0.95 times the theoretical amount necessary for converting the ferrous chloride to ferrous hydroxide,
(B) blowing an oxygen-containing gas into the resulting Fe²⁺-containing solution to form seed crystals of γ-FeOOH,
(C) aging and growing γ-FeOOH for a period of time of 0.5 to 3 hours while maintaining the Fe²⁺-containing solution at a pH value of 2,0 to 8.0 in a non-oxidizing atmosphere,
(D) separating grown particles of γ-FeOOH from the Fe²⁺-containing solution without performing an additional γ-FeOOH crystal growing reaction, without blowing an oxygen-containing gas, and without adding an alkali, and
(E) washing the resulting separated particles.

2. A process according to claim 1, wherein the ferrous chloride concentration in the aqueous solution of ferrous chloride is 0.3 to 0.4 mole/kg.

3. A process according to claim 1, wherein the non-oxidizing atmosphere is a nitrogen atmosphere.

4. A process according to claim 1, wherein at the step of aging and growing γ-FeOOH, the pH value of the Fe²⁺-containing solution is 4.0 to 5.5.

5. A process according to claim 1, wherein at the step of aging and growing γ-FeOOH the temperature of the Fe²⁺-containing solution is 20 to 70°C.

6. A process according to claim 1, wherein said process consists of steps (A), (B), (C), (D), and (E).

## Patentansprüche

1. Verfahren zur Herstellung von Lepidokrokit, umfassend
(A) eine Zugabe eines Alkali zu einer wäßrigen Lösung von Eisen(II)-chlorid in einer 0,20 bis 0,95fachen Menge der zur Umwandlung des Eisen(II)-chlorid in Eisen(II)hydroxid erforderlichen theoretischen Menge,
(B) ein Einblasen eines Sauerstoff-enthaltenden Gases in die erhaltene Fe²⁺-enthaltende Lösung zur Bildung von Impfkristallen von γ-FeOOH,
(C) ein Altern und Wachsenlassen von γ-FeOOH während eines Zeitraums von 0,5 bis 3 h unter Halten der Fe²⁺-enthaltenden Lösung bei einem pH-Wert von 2,0 bis 8,0 in einer nicht oxidierenden Atmosphäre,
(D) ein Abtrennen der gewachsenen γ-FeOOH-Teilchen aus der Fe²⁺-enthaltenden Lösung ohne Durchführen einer weiteren γ-FeOOH-Kristallwachstumsreaktion, ohne Einblasen eines Sauerstoff-enthaltenden Gases und ohne Zugeben eines Alkali und
(E) ein Waschen der erhaltenen abgetrennten Teilchen.

2. Verfahren nach Anspruch 1, wobei die Eisen(II)-chloridkonzentration in der wäßrigen Lösung von Eisen(II)-chlorid 0,3 bis 0,4 Mol/kg beträgt.

3. Verfahren nach Anspruch 1, wobei die nicht oxidierende Atmosphäre aus einer Stickstoffatmosphäre besteht.

4. Verfahren nach Anspruch 1, wobei beim Schritt eines Alterns und Wachsenlassens von γ-FeOOH der pH-Wert der Fe²⁺-enthaltenden Lösung 4,0 bis 5,5 beträgt.

5. Verfahren nach Anspruch 1, wobei bei der Stufe eines Alterns und Wachsenlassens von γ-FeOOH die Temperatur der Fe²⁺⁻enthaltenden Lösung 20 bis 70°C beträgt.

6. Verfahren nach Anspruch 1, wobei das Verfahren aus den Stufen (A), (B), (C), (D) und (E) besteht.

## Revendications

1. Un procédé pour la production de lepidocrosite, qui comporte :
(A) l'addition d'un alcali à une solution aqueuse de chlorure ferreux suivant une quantité de 0,20 à 0,95 fois la quantité théorique nécessaire pour convertir le chlorure ferreux en hydroxyde ferreux,
(B) le soufflage d'un gaz contenant de l'oxygène dans la solution résultante contenant Fe²⁺ pour former des cristaux d'inoculation de γ-FeOOH,
(C) le vieillissement et la croissance de γ-FeOOH pendant une durée de 0,5 à 3 heures tout en maintenant la solution contenant Fe²⁺ à une valeur de pH de 2,0 à 8,0 dans une atmosphère non oxydante,
(D) la séparation des particules de γ-FeOOH développées d'avec la solution contenant Fe²⁺ sans exécuter une réaction additionnelle de croissance des cristaux de γ-FeOOH, sans souffler un gaz contenant de l'oxygène et sans ajouter un alcali, et
(E) le lavage des particules résultantes séparées.

2. Un procédé selon la revendication 1, dans lequel la concentration du chlorure ferreux dans la solution aqueuse de chlorure ferreux est de 0,3 à 0,4 mole/kg.

3. Un procédé selon la revendication 1, dans lequel l'atmosphère non oxydante est une atmosphère d'azote.

4. Un procédé selon la revendication 1, dans lequel, lors de la phase de vieillissement et de croissance du γ-FeOOH, la valeur du pH de la solution contenant Fe²⁺ est de 4,0 à 5,5.

5. Un procédé selon la revendication 1, dans lequel, lors de la phase de vieillissement et de croissance du γ-FeOOH, la température de la solution contenant Fe²⁺ est de 20 à 70°C.

6. Un procédé selon la revendication 1, dans lequel ledit procédé comporte les phases (A), (B), (C), (D), et (E).
